# EUROPEAN PATENT SPECIFICATION

(11) **EP 2 416 620 B1**
(45) Date of publication and mention of the grant of the patent: **01.05.2013**
(21) Application number: 11174985.9
(22) Date of filing: 22.07.2011
(51) Int. Cl.: H05B 3/58

(54) **Electrically heatable multi-layer flexible pipe**
Elektrisch aufheizbares mehrschichtiges flexibles Rohr
Tuyau souple multicouche pouvant être chauffé électriquement

(30) Priority: 02.08.2010 IT VR20100157
(43) Date of publication of application: 08.02.2012
(73) Proprietor: MANIFATTURA TUBI GOMMA S.p.A., 36040 Grisignano di Zocco (Vicenza) (IT)
(72) Inventor: Marcolin, Davide, 36040 Grisignano di Zocco (Vicenza) (IT)
(74) Representative: Ponchiroli, Simone

(56) References cited:
- DE-A1- 4 244 493
- DE-A1-102007 003 454
- DE-A1-102007 003 455
- FR-A- 1 521 146
- US-A- 5 428 706

## Description

This invention relates to an electrically heatable multi-layer flexible pipe. Generally, these are pipes intended for conveying fluids which must be kept at a predetermined temperature depending on their subsequent use in industrial plants.

The most widespread applications include feeding air to the spraying heads of painting plants and conveying food products such as melted chocolate.

In particular, the flexible pipes are advantageously applied where the fluid must be fed to mobile parts of plants, such as the spraying heads of painting plants.

As indicated, this invention relates to multi-layer pipes, in which a resistive-type heating element is inserted between the layers which form the pipe. Moreover, advantageously, the heating element is wound in a spiral around the innermost layers of the pipe and is enclosed in a containment layer.

The heating element usually comprises two conductors, each having a power terminal at one end of the pipe, and between which one or more resistive elements are electrically connected, able to convert electricity into heat. Moreover, the conductors extend from the first end to the second end of the pipe.

At present, there are both many prior art types of heating elements for this application, and many electrically heatable multi-layer pipe structures. For example, those described in patents US 5245161, US 4816649, US 4523086, US 4725713, US 2010126986, DE 3346191, DE 102008062682, US 5910266 and US 4100673.

Therefore, depending on the embodiments, the resistive elements which constitute the heating element may be suitable diffused or concentrated resistors mounted between the two conductors forming a ready-assembled element, or a specific layer of the pipe with resistive properties, in electrical contact with the two conductors. However, in all cases, the resistive elements substantially and effectively correspond to a plurality of resistors connected in parallel between the two conductors.

This invention is advantageously applied with any type of heating element. All of the prior art solutions have proved very efficient for applications with relatively short pipes, for which they can guarantee good temperature uniformity along the entire length.

In contrast, the prior art solutions proved unsuitable as regards heating relatively long pipes (for example, ten or more metres long). In fact, in this case, there are significant thermal gradients along the pipe, with a falling temperature trend gradually as the distance from the end of the pipe where the heating element is electrically powered increases.

In this context the technical purpose which forms the basis of this invention is to provide an electrically heatable multi-layer flexible pipe which overcomes the above-mentioned disadvantages.

In particular, the technical purpose of this invention is to provide electrically heatable multi-layer flexible pipe which guarantees good temperature uniformity even in the case of long lengths.

The technical purpose specified and the aims indicated are substantially achieved by an electrically heatable multi-layer flexible pipe as described in the appended claims.

Further features and the advantages of this invention are more apparent in the detailed description, with reference to the accompanying drawings which illustrate several preferred, non-limiting embodiments of an electrically heatable multi-layer flexible pipe, in which:
- Figure 1 is a schematic side view with the various layers partly cut away, of a first piece of pipe made according to this invention;
- Figure 2 is a schematic side view with the various layers partly cut away, of a second piece of the pipe of Figure 1, located to the right of the piece of pipe illustrated in Figure 1;
- Figure 3 is a schematic side view of a first end of the pipe of Figures 1 and 2; and
- Figure 4 is a schematic side view with some parts cut away to better illustrate others, of a part of a heating element used in the pipe of Figures 1 and 2.

With reference to the accompanying drawings the numeral 1 denotes as a whole an electrically heatable multi-layer flexible pipe made in accordance with this invention.

In general, the pipe 1 comprises firstly at least one inner layer 2 (also called the sheath or sub-layer) which forms the duct for the passage of a fluid to be conveyed. Said layer is advantageously made of a material that is impermeable to fluids (including gases).

Coaxially mounted around the inner layer 2 there is at least one covering layer 3, which is preferably also made of a material impermeable to fluids.

Similarly to the prior art pipes, a first heating element 4 is mounted around the inner layer 2 at the covering layer 3 or inside it. This definition refers to any positioning of the first heating element 4, that is to say: embedded in the covering layer 3; at the inner surface of the covering layer 3 (as in the accompanying drawings); at its outer surface, etc. It should also be noticed that the heating element may be directly applied on the outer surface of the inner layer 2 or separated from it by one or more intermediate layers. Advantageously, the covering layer 3 may be made with a vulcanised rubber base and can at least partly encompass the first heating element 4.

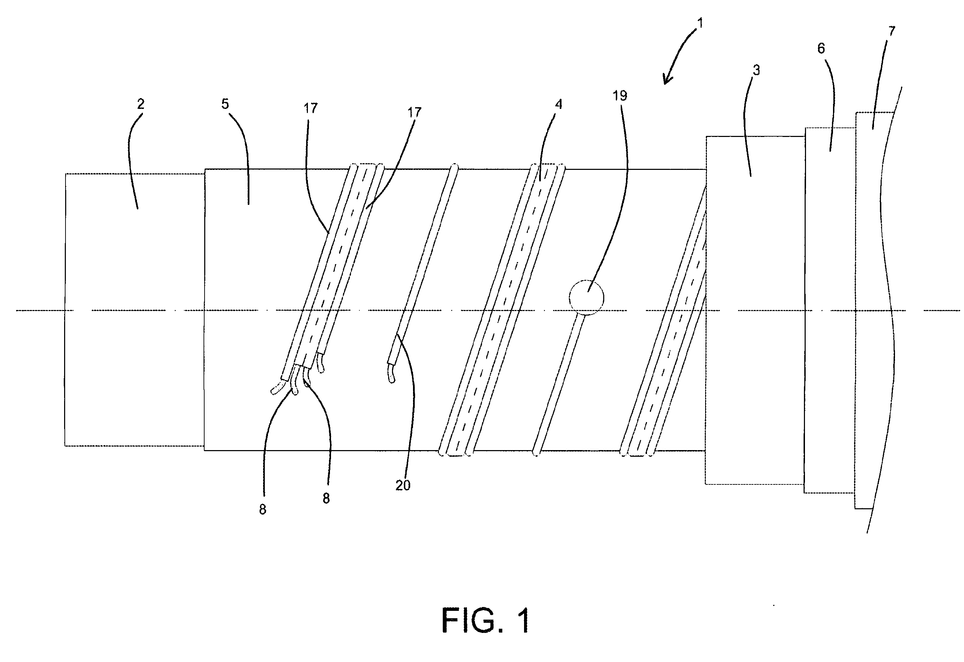

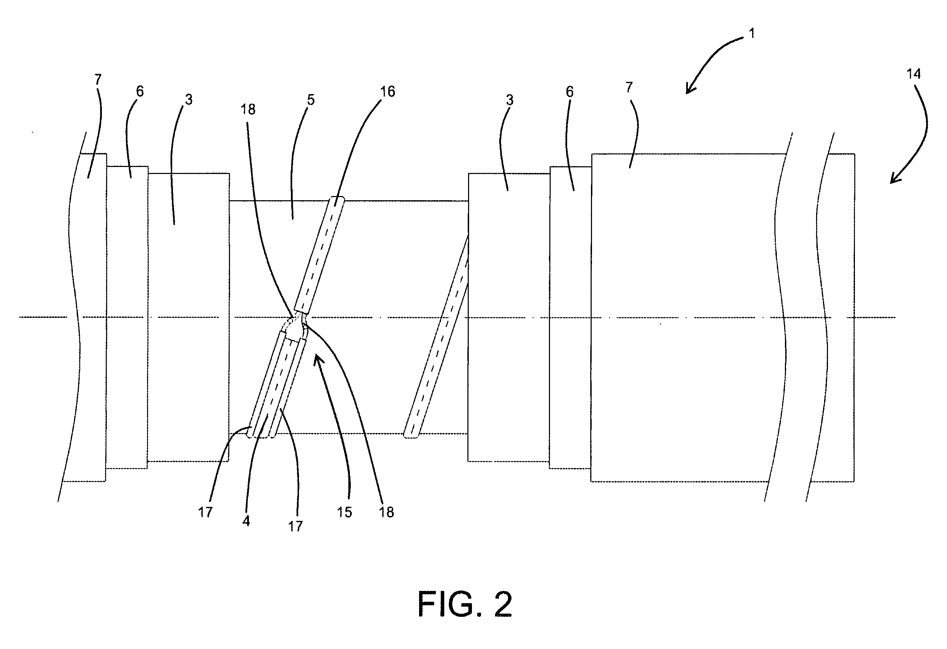

In the preferred embodiments, as well as the elements just indicated, the pipe 1 may comprise a plurality of further layers, or reinforcing elements (such as metal spirals) or other types of elements. For example, the pipe 1 illustrated in Figures 1 and 2 comprises a first fabric layer 5 mounted between the inner layer 2 and the first heating element 4, a second fabric layer 6 mounted on the covering layer 3, and a coating layer 7 forming the outer surface of the pipe 1.

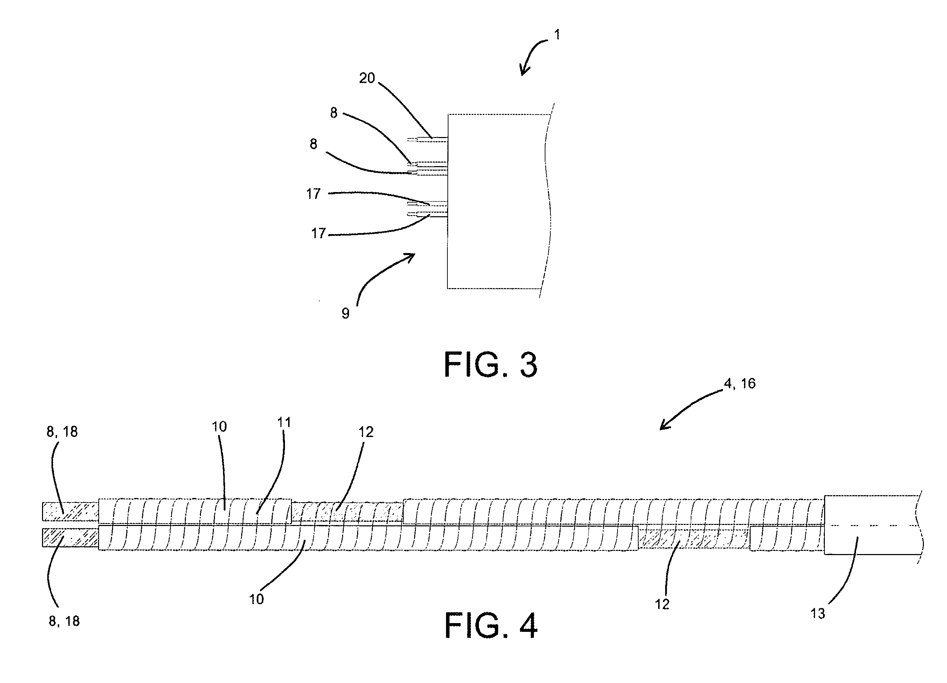

Similarly to the prior art pipes, even in the context of this invention the first heating element 4 in practice comprises a plurality of resistors powered in parallel and has a pair of power terminals 8 which can be accessed at a first end 9 of the pipe 1 (Figure 3). The pair of power terminals 8 can be connected in practice to an electricity supply so as to supply current to the resistors connected in parallel. Similarly to the prior art pipes, the resistors are any type of resistor. They may be concentrated resistors (such as conductive - resistive filaments) or diffused resistors (such as conductive - resistive fillers connected continuously to power wires).

In the embodiment illustrated, the first heating element 4 is a pair of insulated electric wires 10, positioned side by side, around which a resistive filament 11 is wound in a spiral. As shown in Figure 4, the electric wires 10 on one hand form the power terminals 8, and on the other alternately and repeatedly comprise, along the extension of the first heating element 4, uninsulated stretches 12 where the filament 11 is in electrical contact with the wires 10. In this way, each piece of filament 11 positioned between an uninsulated stretch 12 of one wire 10 and an uninsulated stretch 12 of the other wire 10, forms a resistor parallel with all of the others. Moreover, advantageously, the filament 11 is made of a material with thermally self-regulating resistance, that is to say, material able to automatically regulate the absorption of current, thanks to the variation in its resistivity depending on the temperature, in such a way as to achieve and maintain a predetermined operating temperature in the absence of external controls on the electricity supply. Preferably, the heating element comprises a heat-resistant containment sheath 13, for example silicone based.

However, in other embodiments, heating elements of other types may be adopted, such as those described in patents US 5245161, US 4816649, US 4523086, US 4725713, US 2010126986, DE 3346191, DE 102008062682, US 5910266 and US 4100673, whose relevant content is incorporated herein by reference.

Unlike what happens in the prior art pipes, according to this invention the first heating element 4 does not extend from the first end 9 to the second end 14 of the pipe 1, but only from the first end 9 to a first intermediate position 15 located between the first end 9 and the second end 14 of the pipe 1.

Indeed, according to this invention, the pipe 1 also comprises at least a second heating element 16, like the first, also mounted around the inner layer 2. Said second heating element 16 is located downstream of the first with reference to the direction from the first end to the second end 14 of the pipe 1. In fact, the second heating element 16 extends from the first intermediate position 15 towards the second end 14. Depending on the embodiments (and the length of the pipe 1), as is described in more detail below, the second heating element 16 may extend over the entire residual length of the pipe 1 as far as the second end 14 (or as far as the point where the heated stretch must end), or only part of it. In this latter case, the pipe 1 will comprise one or more additional heating elements (like the others and therefore not specifically illustrated) as explained below.

With reference to Figures 1 and 2, which show only the first heating element 4 and the second heating element 16, the first heating element 4 extends from the first end 9 (left side of Figure 1) to the first intermediate position 15 (Figure 2), while the second heating element 16 extends from the first intermediate position 15 to the second end 14 of the pipe 1 (right part of Figure 2).

According to this invention, the pipe 1 also comprises a pair of electric conductors 17, separate from the first heating element 4 and the second heating element 16 and independent of them. Said electric conductors 17 (Figures 1 and 2) extend from the first end 9 at least to the first intermediate position 15 for supplying electricity to the second heating element 16 in parallel with the first heating element 4. As Figure 2 shows, the electric conductors 17, after extending parallel with the first heating element 4 (and alongside it, one on each side) as far as the first intermediate position 15, at the latter are electrically connected to the terminals 18 of the second heating element 16.

It should be noticed that although in Figure 1 both the conductors 17 and the heating element are shown interrupted for the sake of clarity, in reality they extend as far as the first end 9 where they may appear as illustrated in Figure 3.

Advantageously, to guarantee more uniform heating of the pipe 1, the length of the second heating element 16 is less than that of the first heating element 4 (to compensate for the voltage drop on the two conductors 17 up to the first intermediate position 15).

As already indicated, in the most complex embodiments (intended mainly for relatively long pipes), this invention sees the second heating element 16 extend only as far as a second intermediate position located a predetermined distance from the second end 14. Indeed, in this case, the pipe 1 also comprises one or more additional heating elements, like the first and second, which are also mounted around the inner layer 2 and side by side one after another from the second intermediate position as far as the second end 14 of the pipe 1. Each additional heating element is therefore positioned relative to the heating element preceding it (on the side of the first end 9 of the pipe 1), just as the second heating element 16 is positioned relative to the first heating element 4. Consequently, Figure 2 may also be interpreted as a representation of the final additional heating element of the pipe 1.

In order to be able to supply electricity to the additional heating elements, the pipe 1 also comprises at least one pair of electric conductors 17, separate from the heating elements, which extend from the first end 9 at least as far as the side of each heating element facing towards the first end 9. Said electric conductors 17 are connected to the additional heating elements in such a way as to power each of them in parallel with the others. Depending on requirements, the pipe 1 may comprise a single pair of electric conductors 17 for powering all of the heating elements downstream of the first (with reference to the direction from the first end to the second end 14) to which the heating elements are connected in parallel, or it may comprise a plurality of pairs of conductors 17, each connected to one or more heating elements downstream of the first, or the limit case of a pair of electric conductors 17 for each heating element.

It should be noticed that in the context of this invention each conductor may comprise a plurality of pieces which are connected in series (advantageously at the point of connection to a heating element).

Consequently, if the pipe 1 of Figure 2 were also to have an additional heating element, there could be two alternative preferred embodiments.

According to the first embodiment, a single pair of electric conductors 17 could be used, connected to the second heating element 16 at the first intermediate position 15 and then extending alongside it as far as a second intermediate position where they would be connected to the additional heating element.

In contrast, according to the second embodiment, two pairs of conductors 17 could be used, the second pair extending parallel with the first pair from the first end 9 to the first intermediate position 15, and parallel only with the second heating element 16 from the first intermediate position 15 to the second intermediate position.

If more than two heating elements are used one after another, advantageously each of them is shorter than the heating element which precedes it, or the one adjacent to it towards the first end 9 of the pipe 1 (on the left in Figures 1 and 2).

As shown in the accompanying drawings, in the preferred embodiment each heating element and each electric conductor is wound in a spiral around the inner layer 2. However, in other embodiments other layouts may also be used.

Finally, as shown in Figure 1, the pipe 1 may also comprises at least one temperature probe 19 inserted between the layers of the pipe 1 and equipped with a connecting line 20 (schematically illustrated by a single wire) extending to the first end 9 of the pipe 1. Said probe 19 allows detection of the pipe 1 temperature in such a way as to allow it to be controlled (by means of the controlled supply of current to the various heating elements 4, 16).

Operation of the pipe 1 according to this invention is similar to that of the prior art pipes and otherwise immediately derives from the above structural description.

This invention brings important advantages.

In fact, thanks to this invention it was possible to provide an electrically heatable multi-layer flexible pipe which guarantees a more uniform temperature distribution along its extension than the prior art pipes.

Finally, it should be noticed that this invention is relatively easy to produce and that even the cost linked to implementing the invention is not very high. The invention described above may be modified and adapted in several ways without thereby departing from the scope of the inventive concept.

Moreover, all details of the invention may be substituted with other technically equivalent elements and the materials used, as well as the shapes and dimensions of the various components, may vary according to requirements.

## Claims

1. An electrically heatable multi-layer flexible pipe comprising:
at least one inner layer (2) forming a duct for the passage of a fluid to be conveyed;
at least one covering layer (3) coaxially mounted around the inner layer (2);
a first heating element (4) mounted around the inner layer (2) at/in the covering layer (3);
the first heating element (4) comprising a plurality of resistors powered in parallel and a pair of power terminals (8) at a first end (9) of the pipe (1), the pair of terminals being connectable in practice to an electricity supply for supplying current to the resistors;
**characterised:**
**in that** the first heating element (4) extends along the pipe (1) from the first end (9) to a first intermediate position (15) located between the first end and a second end (14) of the pipe (1);
**in that** it also comprises at least a second heating element (16) like the first, mounted around the inner layer (2) and extending from the first intermediate position (15) towards the second end (14);
and **in that** it also comprises at least one pair of electric conductors (17) separate from the first heating element and the second heating element (16) and extending from the first end (9) at least to the first intermediate position (15) for supplying electricity to the second heating element (16) in parallel with the first heating element (4).

2. The pipe according to claim 1, **characterised in that** the second heating element (16) extends to a second intermediate position, and also being **characterised in that** it also comprises one or more additional heating elements like the first and second, which are mounted around the inner layer (2) and side by side one after another starting from the second intermediate position to the second end (14) of the pipe (1), and also **characterised in that** it comprises at least one pair of electric conductors (17) separate from the heating elements and extending from the first end (9) at least to one side of each heating element facing towards the first end (9), for supplying electricity to each heating element in parallel with the others.

3. The pipe according to claim 2, **characterised in that** it comprises a single pair of electric conductors (17) for supplying all of the heating elements downstream of the first, with reference to the direction extending from the first end to the second end (14), the heating elements being connected to the electric conductors (17) in parallel.

4. The pipe according to claim 2, **characterised in that** it comprises a plurality of pairs of electric conductors (17), each connected to one or more heating elements downstream of the first, with reference to the direction extending from the first end to the second end (14).

5. The pipe according to claim 4, **characterised in that** it comprises a separate pair of electric conductors (17) for each heating element downstream of the first, with reference to the direction extending from the first end to the second end (14).

6. The pipe according to any of the foregoing claims, **characterised in that** the second heating element (16) is shorter than the first heating element (4).

7. The pipe according to any of the claims from 2 to 5, **characterised in that** each heating element is shorter than the heating element adjacent to it on the side of the first end (9) of the pipe (1).

8. The pipe according to any of the foregoing claims, **characterised in that** each heating element and each electric conductor is wound in a spiral around the inner layer (2).

9. The pipe according to any of the foregoing claims, **characterised in that** each heating element comprises a pair of insulated electric wires (10) positioned alongside each other, around which at least one resistive filament (11) is wound in a spiral, the electric wires (10) forming the power terminals (8) and comprising alternately and repeatedly, along the length of the heating element, uninsulated stretches (12) where the filament (11) is in electrical contact with the wires to form the plurality of resistors in parallel.

10. The pipe according to claim 9, **characterised in that** the filament (11) is made of material with thermally self-regulating resistance.

11. The pipe according to any of the foregoing claims, **characterised in that** it also comprises at least one temperature probe (19) inserted between the layers of the pipe (1) and equipped with a connecting line (20) extending to the first end (9) of the pipe (1).

## Patentansprüche

1. Elektrisch aufheizbares, mehrschichtiges flexibles Rohr, enthaltend:
- wenigstens eine innere Schicht (2), die eine Leitung für den Durchlauf einer zu fördernden Flüssigkeit bildet;
- wenigstens eine Deckschicht (3), koaxial um die innere Schicht (2) angebracht;
- ein erstes Heizelement (4), montiert um die innere Schicht (2) an/in der Deckschicht (3);
- wobei das erste Heizelement (4) eine Anzahl von parallel gespeisten Widerständen und ein Paar von Anschlussenden (8) an einem ersten Ende (9) des Rohres (1) enthält, wobei das Paar von Anschlussenden praktisch an eine Stromzufuhr zum Speisen der Widerstände mit elektrischem Strom anschliessbar ist;
**dadurch gekennzeichnet:**
- **dass** sich das erste Heizelement (4) entlang dem Rohr (1) erstreckt, und zwar von einem ersten Ende (9) bis zu einer ersten Zwischenposition (15), angeordnet zwischen dem ersten Ende und einem zweiten Ende (14) des Rohres (1);
- **dass** es ebenfalls wenigstens ein zweites Heizelement (16) wie das erste enthält, montiert um die innere Schicht (2) und sich von der ersten Zwischenposition (15) in Richtung des zweiten Endes (14) erstreckend;
- und dadurch, dass es ebenfalls wenigstens ein Paar von elektrischen Leitern (17) enthält, getrennt von dem ersten Heizelement und dem zweiten Heizelement (16) und sich von dem ersten Ende (9) wenigstens bis zu der ersten Zwischenposition (15) erstreckend, um das zweite Heizelement (16) parallel mit dem ersten Heizelement (4) mit Strom zu versorgen.

2. Rohr nach Patentanspruch 1, **dadurch gekennzeichnet, dass** sich das zweite Heizelement (16) bis zu einer zwei ten Zwischenposition erstreckt, und ebenfalls **dadurch gekennzeichnet, dass** es auch ein oder mehrere zusätzliche Heizelemente wie das erste und das zweite enthält, welche um die innere Schicht (2) montiert und eins nach dem anderen Seite an Seite angeordnet sind, ausgehend von der zweiten Zwischenstation bis zu dem zweiten Ende (14) des Rohres (1), und auch **dadurch gekennzeichnet, dass** es wenigstens ein Paar von elektrischen Leitern (17) enthält, getrennt von den Heizelementen und sich von dem ersten Ende (9) aus erstreckend, und zwar wenigstens bis zu einer Seite eines jeden Heizelementes, welches dem ersten Ende (9) zugewandt ist, um jedes Heizelement parallel zu den anderen mit Strom zu versorgen.

3. Rohr nach Patentanspruch 2, **dadurch gekennzeichnet, dass** es ein einzelnes Paar von elektrischen Leitern (17) enthält, um alle Heizelemente stromabwärts des ersten mit Strom zu versorgen, und zwar bezugnehmend auf die Richtung, die von dem ersten Ende zu dem zweiten Ende (14) verläuft, wobei die Heizelemente parallel an die elektrischen Leiter (17) angeschlossen sind.

4. Rohr nach Patentanspruch 2, **dadurch gekennzeichnet, dass** es eine Anzahl von Paaren von elektrischen Leitern (17) enthält, jedes angeschlossen an ein oder mehrere Heizelemente stromabwärts des ersten, und zwar bezugnehmend auf die Richtung, die von dem ersten Ende zu dem zweiten Ende (14) verläuft.

5. Rohr nach Patentanspruch 4, **dadurch gekennzeichnet, dass** es ein getrenntes Paar von elektrischen Leitern (17) für jedes Heizelement stromabwärts des ersten enthält, und zwar bezugnehmend auf die Richtung, die von dem ersten Ende zu dem zweiten Ende (14) verläuft.

6. Rohr nach einem jeden der vorstehenden Patentansprüche, **dadurch gekennzeichnet, dass** das zweite Heizelement (16) kürzer ist als das erste Heizelement (4).

7. Rohr nach einem jeden der Patentansprüche von 2 bis 5, **dadurch gekennzeichnet, dass** ein jedes Heizelement kürzer ist als das an dieses angrenzende Heizelement auf der Seite des ersten Endes (9) des Rohres (1).

8. Rohr nach einem jeden der vorstehenden Patentansprüche, **dadurch gekennzeichnet, dass** ein jedes Heizelement und ein jeder elektrischer Leiter spiralförmig um die innere Schicht (2) gewunden sind.

9. Rohr nach einem jeden der vorstehenden Patentansprüche, **dadurch gekennzeichnet, dass** ein jedes Heizelement ein Paar von nebeneinander angeordneten, isolierten elektrischen Drähten (10) enthält, um welche spiralförmig wenigstens ein Widerstandsfaden (11) gewickelt ist, wobei die elektrischen Drähte die Anschlussenden (8) bilden und abwechselnd und sich wiederholend entlang der Länge des Heizelementes nicht isolierte Abschnitte (12) aufweisen, an denen der Faden (11) sich in elektrischem Kontakt mit den Drähten befindet, um eine Anzahl von parallelen Widerständen zu bilden.

10. Rohr nach Patentanspruch 9, **dadurch gekennzeichnet, dass** der Faden (11) aus einem Material von thermisch selbstregulierendem Widerstand hergestellt ist.

11. Rohr nach einem jeden der vorstehenden Patentansprüche, **dadurch gekennzeichnet, dass** es wenigstens ebenfalls eine Temperatursonde (19) enthält, eingesetzt zwischen den Schichten des Rohres (1) und ausgestattet mit einer Anschlussleitung (20), die sich bis zu dem ersten Ende (9) des Rohres (1) erstreckt.

## Revendications

1. Un tuyau souple multicouche pouvant être chauffé électriquement comprenant :
au moins une couche intérieure (2) définissant un conduit pour le passage d'un fluide à véhiculer ;
au moins une couche de couverture (3) montée coaxialement autour de la couche intérieure (2) ;
un premier élément chauffant (4) monté autour de la couche intérieure (2) au niveau de/dans la couche de couverture (3) ;
le premier élément chauffant (4) comprenant une pluralité de résistances alimentées en parallèle et une paire de bornes d'alimentation (8) au niveau d'une première extrémité (9) du tuyau (1), ladite paire de bornes pouvant être reliée dans la pratique à une alimentation électrique pour alimenter le courant aux résistances ;
**caractérisé :**
**en ce que** le premier élément chauffant (4) s'étend le long du tuyau (1) depuis la première extrémité (9) jusqu'à une première position intermédiaire (15) située entre la première extrémité et une deuxième extrémité (14) du tuyau (1) ;
**en ce qu'**il comprend aussi au moins un deuxième élément chauffant (16) semblable au premier, monté autour de la couche intérieure (2) et s'étendant depuis la première position intermédiaire (15) vers la deuxième extrémité (14) ;
et **en ce qu'**il comprend aussi au moins une paire de conducteurs électriques (17) séparés du premier élément chauffant et du deuxième élément chauffant (16) et s'étendant depuis la première extrémité (9) au moins jusqu'à la première position intermédiaire (15) pour alimenter l'électricité au deuxième élément chauffant (16) en parallèle avec le premier élément chauffant (4).

2. Le tuyau selon la revendication 1, **caractérisé en ce que** le deuxième élément chauffant (16) s'étend jusqu'à une deuxième position intermédiaire, et étant également **caractérisé en ce qu'**il comprend aussi un ou plusieurs éléments chauffants supplémentaires semblables au premier et au deuxième, qui sont montés autour de la couche intérieure (2) côte à côte et en succession depuis la deuxième position intermédiaire jusqu'à la deuxième extrémité (14) du tuyau (1), et également **caractérisé en ce qu'**il comprend au moins une paire de conducteurs électriques (17) séparés des éléments chauffants et s'étendant depuis la première extrémité (9) au moins jusqu'au niveau d'un côté de chaque élément chauffant orienté vers la première extrémité (9), pour alimenter l'électricité à chaque élément chauffant en parallèle avec les autres.

3. Le tuyau selon la revendication 2, **caractérisé en ce qu'**il comprend une seule paire de conducteurs électriques (17) pour alimenter tous les éléments chauffants en aval du premier, en se référant à la direction allant de la première extrémité à la deuxième extrémité (14), les éléments chauffants étant reliés aux conducteurs électriques (17) en parallèle.

4. Le tuyau selon la revendication 2, **caractérisé en ce qu'**il comprend une pluralité de paires de conducteurs électriques (17) reliées, chacune, à un ou plusieurs éléments chauffants en aval du premier, en se référant à la direction allant de la première extrémité à la deuxième extrémité (14).

5. Le tuyau selon la revendication 4, **caractérisé en ce qu'**il comprend une paire de conducteurs électriques (17) distincte pour chaque élément chauffant en aval du premier, en se référant à la direction allant de la première extrémité à la deuxième extrémité (14).

6. Le tuyau selon l'une quelconque des revendications précédentes, **caractérisé en ce que** le deuxième élément chauffant (16) est plus court que le premier élément chauffant (4).

7. Le tuyau selon l'une quelconque des revendications de 2 à 5, **caractérisé en ce que** chaque élément chauffant est plus court que l'élément chauffant qui lui est adjacent du côté de la première extrémité (9) du tuyau (1).

8. Le tuyau selon l'une quelconque des revendications précédentes, **caractérisé en ce que** chaque élément chauffant et chaque conducteur électrique est enroulé en spirale autour de la couche intérieure (2).

9. Le tuyau selon l'une quelconque des revendications précédentes, **caractérisé en ce que** chaque élément chauffant comprend une paire de fils électriques isolés (10) placés les uns à côté des autres, autour desquels au moins un filament résistif (11) est enroulé en spirale, les fils électriques (10) définissant les bornes d'alimentation (8) et comprenant de façon alternée et répétée, le long de la longueur de l'élément chauffant, des tronçons non isolés (12) au niveau desquels le filament (11) est en contact électrique avec les fils pour définir la pluralité de résistances en parallèle.

10. Le tuyau selon la revendication 9, **caractérisé en ce que** le filament (11) est réalisé dans un matériau à résistance thermiquement autorégulatrice.

11. Le tuyau selon l'une quelconque des revendications précédentes, **caractérisé en ce qu'**il comprend aussi au moins une sonde de température (19) insérée entre les couches du tuyau (1) et munie d'une ligne de connexion (20) s'étendant jusqu'à la première extrémité (9) du tuyau (1).
